Europäisches Patentamt

(19)　European Patent Office

　　　Office européen des brevets

(11)　EP 0 867 217 A2

(12)　EUROPEAN PATENT APPLICATION

(43) Date of publication:
30.09.1998　Bulletin 1998/40

(51) Int. Cl.⁶: **B01D 53/04**

(21) Application number: 98105213.7

(22) Date of filing: 23.03.1998

(84) Designated Contracting States:
AT BE CH DE DK ES FI FR GB GR IE IT LI LU MC NL PT SE
Designated Extension States:
AL LT LV MK RO SI

(30) Priority: 26.03.1997 JP 89992/97

(71) Applicant: NICHIAS CORPORATION
Tokyo (JP)

(72) Inventors:
• Kurosawa, Masaji
Inba-gun, Chiba (JP)
• Yamashita, Katsuhiro
Yokohama-shi, Kanagawa (JP)
• Kobayashi,
Takeya
Tokyo (JP)

(74) Representative:
Grünecker, Kinkeldey,
Stockmair & Schwanhäusser
Anwaltssozietät
Maximilianstrasse 58
80538 München (DE)

(54)　**Organic solvent gas adsorption element**

(57)　An organic solvent gas adsorption element comprising a single honeycomb structure on which a plurality of organic solvent gas adsorbents having different adsorption characteristics are supported in separate sections made in the area of the honeycomb structure by dividing either in the air flow direction or in the direction perpendicular to that direction. The adsorption element can treat air contaminated with different types of solvent gases simultaneously.

**Description**

FIELD OF THE INVENTION

The present invention relates to an organic solvent gas adsorption element used in an apparatus for recovering organic solvent gas from air and purifying air.

BACKGROUND OF THE INVENTION

Air contaminated with low concentrations of organic solvent gas is produced in large quantities in coating installations for various machines and tools and printing factories. A profuse discharge of such low concentration organic solvent gas into the air is unfavorable for environmental hygiene, giving a cause of production of photochemical oxidants. It is required to take some countermeasure for collecting the organic solvent gas for disposal or reuse.

There is an adsorption element comprising a honeycomb structure with an adsorbent supported thereon that has recently been attracting attention as an apparatus for collecting organic solvents present in air in low concentrations. The honeycomb structure used in the state-of-the art adsorption element as a carrier on which an organic solvent gas adsorbent is supported is a single-sided corrugated board composed of a high-void corrugated sheet and a flat sheet both made of ceramic fiber, etc., which is rolled up into a cylinder to form tubular passageways through which air to be treated is made to flow (see, for example, WO 91/16971).

While a number of adsorbents have been proposed for use in adsorption elements of this type, zeolite is used most commonly. Zeolite has fine intercommunicating pores, whereby it has a large active surface area and functions as a molecular sieve. Since the kind of solvent gas well adsorbable by zeolite varies depending on the chemical composition ($SiO_2/Al_2O_3$ ratio) and average pore size of zeolite, zeolite has selectivity in gas adsorption activity. Such adsorption selectivity is more or less observed in other adsorbents such as active carbon.

Thus, the most suitable adsorbent has been chosen for use in the above-described type of adsorption elements in accordance with the kind of the organic solvent gas to be adsorbed. The contaminated air released from factories frequently contains a plurality of solvent gases. In order to thoroughly treat such contaminated air, it has been necessary to set two or more adsorption apparatus containing different adsorbents in series.

Any attempt to support two or more adsorbents on a single carrier to provide an adsorption element capable of adsorbing two or more kinds of solvent gases has failed due to the following problems difficult to overcome. When a honeycomb structure is impregnated successively with a plurality of adsorbents, the preceding adsorbent is coated with the following adsorbent and cannot manifest its adsorptivity fully. If a plurality of adsorbents are previously admixed, finely powdered adsorbents that are essentially difficult to disperse uniformly become more apt to agglomerate and more difficult to uniformly distribute throughout the carrier. As a result, adsorption characteristics as expected cannot be obtained.

SUMMARY OF THE INVENTION

An object of the present invention is to provide an organic solvent gas adsorption element having a honeycomb structure in which a plurality of adsorbents having different solvent adsorption characteristics are supported in such a manner as to fully manifest their essential adsorptivity so that the adsorption element may be effective in completely purifying air containing a plurality of solvent gases.

The present invention provides an organic solvent gas adsorption element comprising a honeycomb structure having supported thereon an organic solvent gas adsorbent, wherein the area of the honeycomb structure on which an adsorbent is to be supported is divided into two or more sections, for example, in the air flow direction or in the direction perpendicular to that direction, and a plurality of adsorbents different in solvent adsorption characteristics are supported on the respective sections.

The adsorption element according to the present invention at least includes two embodiments. In one embodiment, two adsorbents different in solvent adsorption characteristics are separately supported on a corrugated paper sheet and a flat paper sheet which constitute the honeycomb structure. In the other embodiment, the area of the honeycomb structure on which an adsorbent is to be supported is divided into two or more sections along the direction of an air flow, on which a plurality of adsorbents different in solvent adsorption characteristics are separately supported.

DETAILED DESCRIPTION OF THE INVENTION

A plurality of adsorbents which are supported on the single honeycomb structure are selected considering the kinds of the organic solvent gases contained in the air to be treated. For example, in the treatment of the air containing aromatic hydrocarbons and lower aliphatic ketones, because there is no good adsorbent for both of them, a good one for the former and a good one for the latter should be selected. The solvent adsorption characteristics of general adsorbents are well known in the art, giving no particular difficulty in making a choice. For example, it is known that the adsorption behavior of a zeolite adsorbent, which is a typical adsorbent, depends on the chemical composition (i.e., $SiO_2/Al_2O_3$ ratio) and average pore size of zeolite, generally showing the following tendencies.

As the $SiO_2/Al_2O_3$ ratio decreases, zeolite becomes more hydrophilic, exhibiting high adsorptivity for highly polar solvents, such as alcohols. In contrast, as the ratio increases, zeolite becomes more lipophilic, showing high adsorptivity for nonpolar solvents, such as hydrocarbons.

As the average pore size decreases, the molecular size of a selectively adsorbed solvent becomes smaller. As the average pore size increases, zeolite adsorbs a solvent having a larger molecular size.

If necessary, three or more kinds of adsorbents may be used in combination.

The methods of preparing the honeycomb structure having a plurality of the adsorbents supported separately thereon are explained below.

Where two selected adsorbents A and B are separately supported on corrugated paper and flat paper of the honeycomb structure, adsorbent A is supported on corrugated paper obtained by corrugating base paper for a paper honeycomb structure in a usual manner, while adsorbent B is supported on flat base paper. Any known methods can be used for making the absorbent be supported on the paper. For example, the adsorbent can be supported by incorporating the adsorbent into the whole stuff before paper making or applying a slurried adsorbent to base paper by coating or dipping followed by drying. The corrugated paper and the flat paper each having the respective adsorbents supported thereon are superimposed and bonded at the contact sites to obtain a single-sided corrugated paperboard. The paperboard is rolled up and fixed into a cylindrical honeycomb structure in which a layer carrying adsorbent A and a layer carrying adsorbent B alternate. If desired, the adsorption element may be subjected to hardening treatment with silicic acid gel, firing at a high temperature, and the like.

In the resulting adsorption element, every passageway for air extending in parallel to the axis is surrounded by the adsorbent A-carrying corrugated paper wall and the absorbent B-carrying flat paper wall. Accordingly, air is treated with two adsorbents at the same time while flowing through the passageways.

Where a plurality of adsorbents different in solvent adsorption characteristics are separately supported in divided sections of the honeycomb structure along the direction of an air flow, two or more adsorbents are applied in turns to each divided section in the air flow direction of both corrugated paper and flat paper either by coating or dipping. The adsorbents-carrying corrugated paper and flat paper are then fabricated into a honeycomb structure.

An adsorbent element having two adsorbents in two divided sections in the air flow direction can also be prepared by first making an adsorbent-free honeycomb structure, dipping a half of the honeycomb structure in a dispersion of adsorbent A, and then dipping another half in a dispersion of absorbent B.

Whichever method may be adopted, air flowing through every passageway of the resulting adsorption element is faced with a plurality of adsorbent-carrying areas and thereby treated successively with a plurality of adsorbents.

In a modified embodiment, adsorbent A is supported on one of corrugated paper and flat paper, and two or more different adsorbents are separately applied to the other paper in divided sections arranged in the air flow direction. The resulting adsorbent-carrying corrugated paper and flat paper are then combined and rolled up into a honeycomb structure. In the adsorption element of this embodiment, air is treated successively with plural adsorbents while being continuously treated with adsorbent A.

In the above-described methods, the kinds of the adsorbents to be used in combination, the positions in the honeycomb structure where the plural adsorbents are to be applied, and the area ratio of the plural adsorbents are preferably decided so as to bring about the best results taking the kinds and concentration ratio of organic solvents to be adsorbed into account.

While the base paper for making up the honeycomb structure carrier does not need to be of special kind, it is preferred for the base paper to have as high a porosity as possible for supporting a powdered adsorbent such as zeolite. The base paper preferably has a porosity of from 65 to 95%. The terminology "porosity" as used herein means (1-(apparent density/true density)) $\times$ 100 (%). Suitable examples thereof include paper having a thickness of 0.15 to 0.50 mm and a density of 0.1 to 0.5 $g/cm^3$, which is made from a mixture of at least one fiber of inorganic fibers, such as alumina fiber, silica fiber, alumina-silica fiber, zirconia fiber, and glass fiber; cellulose fibers, such as rayon and wood pulp; and synthetic fibers, such as vinylon, polyethylene fiber, acryl fiber, and polyester fiber, and an organic binder.

The present invention will now be illustrated in greater detail with reference to Examples, but it should be understood that the present invention is not construed as being limited thereto.

### EXAMPLE 1

Stuff comprising alumina-silica fiber and a small amount of organic synthetic fiber was made into base paper having a thickness of 0.2 mm and a density of 0.25 $g/cm^3$. The base paper was cut into halves. One half was impregnated with slurried synthetic zeolite having an average pore size of 5 Å and dried. The other half was impregnated with slurried zeolite having an average pore size of 10 Å, dried, and corrugated to have a wave length of 3.3 mm and a wave height of 1.9 mm. The amount of zeolite supported on each sheet of paper was 110 g/m².

The impregnated corrugated paper and the impregnated flat paper were superimposed and bonded via an adhesive, and the laminate was rolled up in the direction of wave propagation to form a cylindrical honeycomb structure of 2000 mm in diameter and 400 mm in length having air passageways open at both ends thereof. The structure was dipped in an inorganic binder, dried, and fired to remove any organic matter to obtain an adsorption element comprising a honeycomb structure having supported thereon two different species of zeolite separately.

EXAMPLE 2

An adsorption element comprising a honeycomb structure having supported thereon two different species of zeolite separately was obtained in the same manner as in Example 1, except for using flat paper impregnated with synthetic zeolite having an average pore size of 10 Å and corrugated paper impregnated with zeolite having an average pore size of 5 Å.

EXAMPLE 3

A honeycomb structure was fabricated in the same manner as in Example 1, except that impregnation with zeolite was not conducted. A half of the adsorbent-free honeycomb structure was dipped in slurried zeolite having an average pore size of 10 Å to form the side from which air to be treated enters (inlet side). The other half of the structure was dipped in slurried zeolite having an average pore size of 5 Å to form the side from which treated air is discharged (outlet side). The amount of zeolite supported on each section was 110 g/m².

EXAMPLE 4

An adsorption element was obtained in the same manner as in Example 3, except for using zeolite having an average pore size of 5 Å in the inlet side and that having an average pore size of 10 Å in the outlet side.

COMPARATIVE EXAMPLE 1

An adsorption element was obtained in the same manner as in Example 3, except for using zeolite having an average pore size of 10 Å in both the inlet side and the outlet side (i.e., the whole honeycomb structure).

COMPARATIVE EXAMPLE 2

An adsorption element was obtained in the same manner as in Example 1, except for using zeolite having an average pore size of 5 Å in both the corrugated paper and the flat paper.

An adsorption test was carried out under the following conditions using each of the adsorption elements prepared in Examples and Comparative Examples. The results obtained are shown in Table below.

Treated Air:      Containing 150 ppm of xylene and 200 ppm of methyl ethyl ketone (MEK); 25±2°C; 60% RH.
Air Flow Rate:    2 m/sec
Measurement:      During the period of 1 to 4 minutes from the start of ventilation, the discharged gas was sampled every minute, and the xylene concentration and MEK concentration of the samples were measured.

Table

| | Xylene (ppm) | | | | MEK (ppm) | | | |
|---|---|---|---|---|---|---|---|---|
| | 1 min. | 2 mins. | 3 mins. | 4 mins. | 1 min. | 2 mins. | 3 mins. | 4 mins. |
| Example 1 | 0 | 0 | 5 | 10 | 0 | 0 | 0 | 0 |
| Example 2 | 0 | 5 | 10 | 25 | 0 | 0 | 0 | 5 |
| Example 3 | 0 | 0 | 5 | 15 | 0 | 0 | 0 | 0 |
| Example 4 | 0 | 0 | 10 | 20 | 0 | 0 | 0 | 5 |
| Compara. Example 1 | 0 | 0 | 0 | 5 | 0 | 10 | 25 | 55 |

Table (continued)

| | Xylene (ppm) | | | | MEK (ppm) | | | |
|---|---|---|---|---|---|---|---|---|
| | 1 min. | 2 mins. | 3 mins. | 4 mins. | 1 min. | 2 mins. | 3 mins. | 4 mins. |
| Compara. Example 2 | 50 | 150 | 150 | 150 | 0 | 0 | 0 | 0 |

As described above, the adsorption element according to the present invention comprises a single honeycomb carrier haying supported thereon a plurality of adsorbents different in solvent adsorption characteristics, and each adsorbent is allowed to exert its full adsorptivity. As a result, the single adsorption element enables air containing both a lipophilic solvent gas and a polar solvent gas to be treated efficiently and completely purified.

While the invention has been described in detail and with reference to specific examples thereof, it will be apparent to one skilled in the art that various changes and modifications can be made therein without departing from the spirit and scope thereof.

**Claims**

1. An organic solvent gas adsorption element comprising a honeycomb structure having supported thereon an organic solvent gas adsorbent, wherein the area of the honeycomb structure on which an adsorbent is to be supported is divided into two or more sections, and a plurality of adsorbents different in solvent adsorption characteristics are supported on the respective sections.

2. An organic solvent gas adsorption element comprising a honeycomb structure having supported thereon an organic solvent gas adsorbent, wherein said honeycomb structure is constructed of corrugated paper and flat paper, and two adsorbents different in solvent adsorption characteristics are separately supported on said corrugated paper and said flat paper.

3. An organic solvent gas adsorption element comprising a honeycomb structure having supported thereon an organic solvent gas adsorbent, wherein the area of said honeycomb structure on which an adsorbent is to be supported is divided into two or more sections along the direction of an air flow, and a plurality of adsorbents different in solvent adsorption characteristics are separately supported in the respective sections.